# EUROPÄISCHE PATENTSCHRIFT

(11) **EP 0 974 825 B1**
(45) Veröffentlichungstag und Bekanntmachung des Hinweises auf die Patenterteilung: **17.09.2008**
(21) Anmeldenummer: 99113688.8
(22) Anmeldetag: 15.07.1999
(51) Int. Cl.: G01L 19/06, G01L 19/14, G01L 13/02, G01L 9/00

(54) **Relativdruck-Sensor**
Relative pressure sensor
Capteur de pression relative

(30) Priorität: 21.07.1998 EP 98113587
(43) Veröffentlichungstag der Anmeldung: 26.01.2000
(73) Patentinhaber: Endress + Hauser GmbH + Co. KG, 79689 Maulburg (DE)
(72) Erfinder: Hegner, Frank Dr., 79540 Lörrach (DE); Schmidt, Elke Maria, Dipl.-Ing., 79650 Schopfheim (DE); Rossberg, Andreas, Dr., 79713 Bad Säckingen (DE); Drewes, Ulfert, Dipl.-Phys., 79379 Müllheim (DE)
(74) Vertreter: Andres, Angelika Maria

(56) Entgegenhaltungen:
- WO-A-96/34264
- DE-C- 4 244 460
- US-A- 5 747 694

## Beschreibung

Die Erfindung betrifft Relativdruck-Sensoren. Damit lassen sich Drücke von Medien, z.B. von Flüssigkeiten, Gasen oder Dämpfen, messen, wobei die Messung gegenüber dem gerade herrschenden Atmosphären- oder Umgebungsdruck erfolgt, also dieser Atmosphären- oder Umgebungsdruck als Referenzdruck dient.

In der US-A 57 47 694 ist ein Relativdruck-Sensor beschrieben, der umfaßt:
- ein Sensorelement,
   -- das auf einem Glaspodest befestigt ist und
   -- das durch eine der Führung von Referenzluft dienende Bohrung im Glaspodest hindurch mit einem einen zu messenden Druck aufweisenden Medium in Verbindung steht, und
- ein Gehäuse
   -- mit einem Innenraum,
   -- mit einem Druckanschluß-Stutzen,
   -- mit einer für die Referenzluft zugänglichen seitlichen Kammer,
      --- in die, sie abschließend, in einer Ebene oberhalb des Sensorelements ein hydrophobes, offenporiges Filter eingesetzt ist, und
   -- mit einer oberhalb des Sensorelements angeordneten Referenzluft-Kammer,
      --- in die die Referenzluft vom Filter aus gelangt.

Ferner ist in der US-A 50 79 953 als eine von drei Varianten ein Relativdruck-Sensor beschrieben, der umfaßt:
- ein kapazitives Sensorelement mit einer Membran und einem Grundkörper,
   -- der an einem Rand mit einem Rand der Membran unter Bildung einer Kammer mittels einer Fügestelle druckdicht verbunden ist und
   -- durch den eine der Führung von Referenzluft dienende Bohrung von einer Außenseite bis in die Kammer hindurchführt,
      --- wobei eine Außenfläche der Membran mit einem unter einem Druck stehenden Medium beim Messen in direkten Kontakt kommt, und
- ein Gehäuse
   -- mit einem Innenraum,
   -- mit einem Anschlußteil,
      --- der in einen Druckanschluß-Stutzen übergeht und
      --- in den die Membran, den Innenraum verschließend, eingesetzt ist,
   -- mit einem Deckel und
   -- mit einer von einer Stirnseite des Frontteils durch eine Wand des Gehäuses in den Deckel führenden und erst dort in das Gehäuse mündenden Bohrung zur Führung von Referenzluft.

Üblicherweise ist, was in der US-A 50 79 953 nicht erwähnt ist, die Austrittsöffnung der Referenzluft-Bohrung im Frontteil mit einem offenporigen, hydrophoben Polytetrafluorethylen-Filterpfropfen verschlossen, damit keine verunreinigenden Partikel ins Innere des Gehäuses und somit zum Sensorelement gelangen können, Spritz- und/oder Kondenswasser abgewiesen wird und Wassertröpfchen nicht in den Innenraum gesaugt werden.

Die Austrittsöffnung der Referenzluft-Bohrung liegt bei der Anordnung nach der US-A 50 79 953 im Gegensatz zu der Anordnung der US-A 57 47 694 tiefer als die Membran und ist daher so angeordnet, daß die Referenzluft den Taupunkt von in ihr enthaltener Feuchte schon erreicht hat und daraus auskondensiertes Wasser somit nach außen abfließen kann, bevor die Referenzluft ins Innere des Gehäuses gelangt.

Dies ist bei der Anordnung der US-A 57 47 694 gerade nicht so, so daß trotz des hydrophoben Filters feuchtigkeitsgesättigte Luft bis zum Sensorelement gelangen kann. Diese US-A macht auch keine Angaben dazu, aus was für einem Material das Filter besteht; üblicherweise ist es daher wie bereits erwähnt ein Polytetrafluorethylen-Filter.

Bei der Umkonstruktion des Relativdruck-Sensors nach der US-A 50 79 953 dahingehend, daß auf den Anschlußstutzen verzichtet und praktisch die gesamte Membranfläche vom Medium direkt bespült werden kann, also bei der Schaffung eines sogenannten frontbündigen Relativdruck-Sensors, hat sich nun gezeigt, daß der Polytetrafluorethylen-Filterpfropfen und die zugehörige Austrittsöffnung seitlich in einem Frontteil des Gehäuses angeordnet werden müssen und daß daher der Taupunkt der Referenzluft nicht mehr außerhalb des Innenraums des Gehäuses liegt; er liegt nämlich praktisch am Sensorelement selbst. Somit kondensiert der Wasserdampf im Innenraum des Gehäuses sowie am oder im Sensorelement, und sowohl dieses als auch nach diesem das Gehäuse laufen allmählich mit Wasser voll.

Dies ist hauptsächlich darauf zurückzuführen, daß der Polytetrafluorethylen-Filterpfropfen nur eine im Vergleich zum Metall des Gehäuses sehr geringe Wärmeleitfähigkeit aufweist. Somit gelangt auch hier wasserdampf-gesättigte Referenzluft, die wärmer als die Membran ist, in den Innenraum des Gehäuses, ohne daß ihre Feuchte am Polytetrafluorethylen-Filterpfropfen auskondensiert, selbst wenn der Frontteil des Gehäuses auf der Temperatur des aktuellen Taupunkts der Referenzluft liegt.

Es ist daher eine Aufgabe der Erfindung, einen Relativdruck-Sensor mit frontbündiger Membran anzugeben, bei dem die Referenzluft ihren aktuellen Taupunkt immer schon erreicht, bevor sie ins Gehäuse-Innere gelangt.

Zur Lösung dieser Aufgabe besteht die Erfindung in einem Relativdruck-Sensor(1) zum Messen des Drucks eines Mediums gegenüber dem gerade herrschenden Atmosphären- oder Umgebungsdruck als Referenzdruck, wobei der Relativdruck-Sensor (1) umfasst:
ein kapazitives, resistives oder piezoelektrisches Sensorelement (2) mit einer Membran (21),
ein Gehäuse (7) mit einem Innenraum (71), mit einem über den Innenraum weitgehend offenen Frontteil (72), in dessen Nähe die Membran den Innenraum derart verschließt, dass der Frontteil über die Membran vorsteht, wobei
eine Außenfläche (211) der Membran und der über die Membran vorstehende Frontteil mit einem unter einem Druck stehenden Medium beaufschlagbar ist,
mit einer durch den Frontteil(72) von einer Außenseite in das Gehäuse hinein angebrachten Bohrung (722) zur Führung von Referenzluft zu einer von der Außenfläche (211) abgewandten Innenfläche der Membran, um die Membran mit dem Referenzdruck zu beaufschlagen, dadurch gekennzeichnet, dass
die Bohrung (722) von der Außenseite her mit einem offenporigen, gut wärmeleitenden und hydrophoben Filter (8) aus einem hydrophob gemachten Sintermetall oder einem hydrophob gemachten Metall-Schwamm verschlossen ist, wobei der Filter derart in dem Frontteil positioniert ist, dass die Oberflächen-Temperatur des Filters praktisch gleich der Temperatur der Membran und des Mediums ist.

Nach einer ersten bevorzugten Ausgestaltung der Erfindung besteht das Filter aus einem hydrophob gemachten Sintermetall oder einem hydrophob gemachten Metall-Schwamm; das Sintermetall kann bevorzugt aus Edelstahl oder Bronze, der Metall-Schwamm aus Titan- oder Zirconium-Schwamm bestehen.

Nach einer zweiten bevorzugten Ausgestaltung der Erfindung ist ein kapazitives Sensorelement vorgesehen,
- das zusätzlich zur Membran einen Grundkörper umfaßt,
   -- der an einem Rand mit einem Rand der Membran unter Bildung einer Kammer mittels einer Fügestelle druckdicht verbunden ist und
   -- durch den eine der Führung von Referenzluft dienende Bohrung von einer Außenseite bis in die Kammer hindurchführt,
- und bei dem auf einer Innenseite der Membran eine Elektrode und auf einer gegenüberliegenden Innenseite des Grundkörpers mindestens eine Elektrode angeordnet sind,
   -- wobei die Elektrode(n) des Grundkörpers durch diesen hindurch zu dessen Außenseite hin elektrisch kontaktiert sind und
   -- die Elektrode der Membran durch die Fügestelle hindurch elektrisch kontaktiert ist.

Nach einer dritten bevorzugten Ausgestaltung der Erfindung ist ein resistives Sensorelement vorgesehen, bei dem auf der Membran ein einziger Dehnmeßstreifen oder eine Halbbrücke aus zwei Dehnmeßstreifen oder eine Vollbrücke aus vier Dehnmeßstreifen angeordnet ist.

Nach einer vierten bevorzugten Ausgestaltung der Erfindung ist ein piezoelektrisches Sensorelement vorgesehen, bei dem auf der Membran mindestens ein Piezoelement angeordnet ist.

Ein Vorteil der Erfindung besteht darin, daß der Taupunkt der Referenzluft wegen der guten Wärmeleitfähigkeit des Filters nun immer am Filter selbst liegt, weil sichergestellt ist, daß die Oberflächen-Temperatur des Filters praktisch gleich der Temperatur der Membran und des Mediums ist.

Daher kann sich das Filter wegen dessen hydrophober Eigenschaften nicht mit Wasser vollsaugen, sondern das aus der Referenzluft auskondensierte Wasser wird nach außen abgeleitet. Im Innenraum des Gehäuses und im oder am Sensorelement wird der Taupunkt nicht mehr unterschritten, so daß kein kondensiertes Wasser im Innenraum entsteht.

Die Erfindung wird nun anhand der Figuren der Zeichnung näher erläutert, in denen Ausführungsbeispiele schematisch dargestellt sind.
- Fig. 1: zeigt im Schnitt eine Vorderansicht eines Relativdruck-Sensors, und
- Fig. 2: zeigt schematisch eine Beschichtungsvorrichtung, in der Sintermetall-Filter hydrophob gemacht werden.

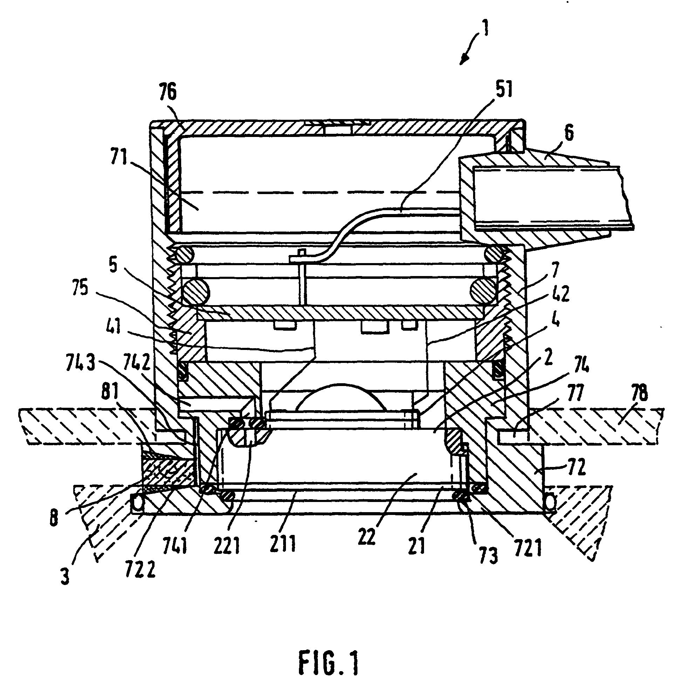

In Fig. 1 ist eine Vorderansicht eines Relativdruck-Sensors 1 im Schnitt dargestellt, der im folgenden kurz als Sensor bezeichnet ist. Wesentliche Teile des Sensors sind ein Sensorelement 2 mit einer Membran 21, von der eine Außenfläche 211 mit einem unter einem Druck stehenden Medium beim Messen in direkten Kontakt kommt. Dieses Medium kann z.B. in einem Vorratsbehälter 3 gespeichert sein, von dem in Fig. 1 nur ein Teil dargestellt ist und in dessen Wand der Sensor 1 eingesetzt ist.

Im Ausführungsbeispiel der Fig. 1 ist ein kapazitiver Keramik-Sensor vorausgesetzt, so daß das Sensorelement 2 außer der Membran 21 auch einen Grundkörper 22 aufweist. Dieser ist an einem Rand mit einem Rand der Membran 21 unter Bildung einer Kammer mittels einer Fügestelle druckdicht verbunden. Durch den Grundkörper 22 hindurch ist eine der Führung von Referenzluft dienende Bohrung 221 von einer Außenseite bis in die Kammer angebracht.

Der Vollständigkeit halber sei noch erwähnt, was aber in Fig. 1 nicht dargestellt ist, daß auf einer Innenseite der Membran 21 eine Elektrode und auf einer gegenüberliegenden Innenseite des Grundkörpers 22 mindestens eine Elektrode angeordnet sind.

Die Elektrode der Membran 21 ist durch die Fügestelle hindurch elektrisch kontaktiert und außerhalb z.B. mit einem Schaltungsnullpunkt verbunden. Die Elektrode bzw. Elektroden des Grundkörpers 22 ist bzw. sind durch den Grundkörper 22 hindurch zu dessen Außenseite hin elektrisch kontaktiert und führen zu einer darauf angeordneten elektronischen Schaltung 4.

Diese formt die Kapazitätsänderungen z.B. in eine sich entsprechend ändernde elektrische Spannung um, die über zwei Leitungen 41, 42 zu einer Printplatte 5 und von dort, gegebenenfalls nach weiterer elektronischer Verarbeitung, über ein Kabel 51 zu einer Buchse 6 gelangt.

Anstatt des im Ausführungsbeispiel der Fig. 1 dargestellten kapazitiven Keramik-Sensors kann auch ein resistiver oder piezoelektrischer Sensor verwendet werden. Bei diesen Arten von Sensoren trägt die jeweilige Membran Dehnmeßstreifen, z.B. einen einzigen Dehnmeßstreifen oder eine Halbbrücke oder eine Vollbrücke, also zwei in Serie geschaltete bzw. vier Dehnmeßstreifen, bzw. mindestens ein Piezoelement.

Das Sensorelement 2 ist in ein Gehäuse 7 eingesetzt, das einen Innenraum 71 und einen Frontteil 72 hat, der über den Innenraum hinweg weitgehend offen ist und in dessen Nähe die Membran 21 den Innenraum 71 derart verschließt, daß der Frontteil 72 über die Membran 21 vorsteht. In Fig. 1 ist dies daurch erreicht, daß das Sensorelement vom Innenraum 71 her unter Zwischenlage einer Dichtung 73, z.B. eines O-Ringes, gegen einen Vorsprung 721 des Frontteils 72 gepreßt ist.

Hierzu dient in Fig. 1 ein Ring 74, der sich auf dem Grundkörper 22 abstützt und gegen den ein Schraubring 75 drückt. Im Ring 74 beginnt dort, wo die Bohrung 221 des Grundkörpers 22 mündet, eine senkrechte Bohrung 741, die in eine waagrechte, an der Mantelfläche mündende Bohrung 742 übergeht.

Durch den Frontteil 72 hindurch ist von einer Außenseite her in das Gehäuse 7 hinein eine Bohrung 722 zur Führung von Referenzluft angebracht. Diese Bohrung 722 steht mit der waagrechten Bohrung 742 über einen Spalt 743 zwischen dem Ring 74 und dem Gehäuse 7 in Verbindung.

Die Bohrung 722 ist von der Außenseite her mit einem offenporigen, gut wärmeleitenden und hydrophoben Filter 8 verschlossen. In Fig. 1 ist der Filter 8 mittels eines wärmeleitenden Klebers 81 in der Bohrung 722 fixiert. Der Filter 8 ist bevorzugt ein hydrophob gemachtes Sintermetall, insb. aus Edelstahl oder Bronze, oder ein hydrophob gemachter Metall-Schwamm, insb. aus Titan oder Zirconium.

Das Gehäuse 7 weist ferner einen Deckel 76 auf, so daß alle im Innenraum 71 angeordneten und oben erwähnten Teile des Sensors von der Seite des Deckels ins Gehäuse eingesetzt werden können. Ferner weist das Gehäuse 7 oberhalb der den Filter 8 aufnehmenden Bohrung 722 eine Ringnut 77 auf, die der Wärme-Entkopplung zwischen Gehäuse-Unterteil und -Oberteil dient. In der Ringnut kann, wie dargestellt, eine nur teilweise gezeigte wärme-isolierende Spannscheibe 78 angeordnet werden.

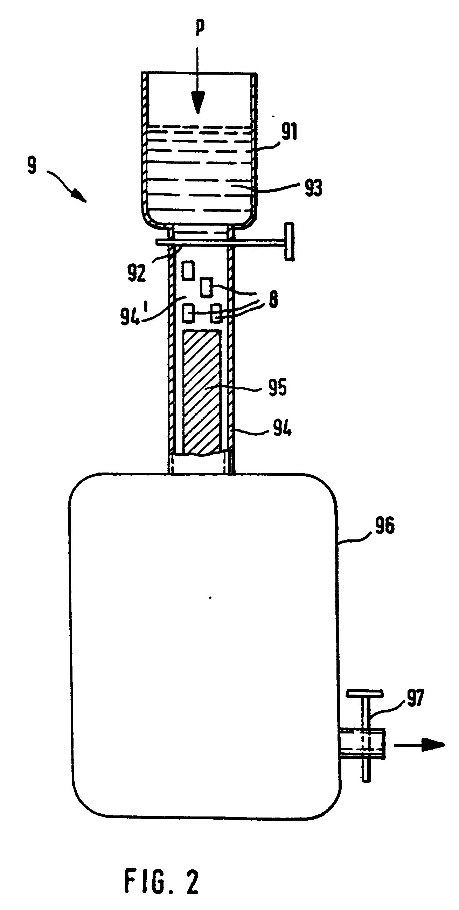

In Fig. 2 ist schematisch eine Beschichtungsvorrichtung 9 dargestellt, in der Filter aus Sintermetall oder Metall-Schwamm hydrophob gemacht werden. Derartige Sintermetall-Filter aus Edelstahl (1.4404) oder Bronze bzw. Metall-Schwämme aus Titan oder Zirconium haben bevorzugt einen Poren-Durchmesser von 1 µm bis 10 µm und werden zunächst mit den benötigten Abmessungen, also Länge und Durchmesser, fertig hergestellt.

Werden Filter aus Edelstahl verwendet, so werden diese vor dem Hydrophob-Machen zunächst gereinigt, um die Haftung der aufzubringenden hydrophoben Beschichtung zu gewährleisten. Da ein Reinigen in einer entsprechenden Flüssigkeit wegen der erwähnten geringen Porengröße der Filter nicht möglich ist - die Flüssigkeit würde die Poren verstopfen -, werden die Edelstahl-Filter in strömendem Wasserstoff gereinigt. Hierzu werden die Filter auf ca. 1.000 °C in einem Quarzrohr erhitzt. Der Wasserstoff durchströmt den Quarzkolben unter ca. 10⁵ Pa (= 1 bar) Überdruck und wird am Auslaß abgebrannt.

Die anderen genannten Filter-Materialien sind in vergleichbarer Weise zu reinigen, wobei im Falle von Zirconium-Schwamm als gas, in dem gereinigt wird, nicht Wasserstoff, sondern z.B. Argon verwendet wird.

Nach dem Erkalten und dem Entnehmen aus dem Quarzrohr werden die sauberen Filter in die Beschichtungsvorrichtung 9 gebracht. Diese umfaßt einen zur Atmosphäre offenen Flüssigkeitsbehälter 91, an dessen Unterseite ein erstes Ventil 92 angebracht ist. Der Atmosphärendruck p kann somit auf die Flüssigkeit 93 im Behälter 91 einwirken.

Die Flüssigkeit 93 ist ein in einem Lösungsmittel, z.B. in Tetrachlorkohlenstoff, stark verdünntes Imprägniermittel, wie z.B. ein Silikonöl, Paraffinöl oder ein fluoriertes Siloxan. Bevorzugt beträgt das Mischungsverhältnis von Imprägniermittel zu Lösungsmittel etwa 1:20.

Unterhalb des Ventils 92 befinden sich die sauberen Filter 8 in einem Filteraufnahmeraum 94' eines Rohres 94 oberhalb von einem Strömungsengpaß 95 für die Flüssigkeit 93. Das Rohr 94 mündet in einen Auffangbehälter 96 für die Flüssigkeit 93, der über ein zweites Ventil 97 an eine durch den Pfeil veranschaulichte Vakuumpumpe angeschlossen ist.

Nach dem Einfüllen der Filter werden das Ventil 92 geschlossen, das Ventil 97 geöffnet und die Vakuumpumpe eingeschaltet, so daß aus den Poren der Filter die darin befindliche Luft entfernt wird. Nach dem Evakuieren werden das Ventil 97 geschlossen und das Ventil 92 geöffnet.

Dadurch strömt unter der Wirkung des Atmosphärendrucks p die Flüssigkeit 93, also Imprägniermittel, in den Filteraufnahmeraum 94', umhüllt die Filter 8 und zieht in deren Poren hinein. Nach dem Einlaufen der gesamten, zuvor in den Flüssigkeitsbehälter 91 eingefüllten Menge an Imprägniermittel in den Filteraufnahmeraum 94' wird das Ventil 97 geöffnet. Dadurch herrscht im Filteraufnahmeraum 94' Atmosphärendruck, der endgültig alle Poren der Filter 8 mit Imprägniermittel vollpreßt.

Nun werden die imprägnierten Filter entnommen und auf bevorzugt ca. 200 °C erhitzt. Dadurch wird das Lösungsmittel verdampft und das Imprägniermittel in die Oberflächen der Poren eingebrannt, so daß diese hydrophob werden.

## Patentansprüche

1. Relativdruck-Sensor (1) zum Messen des Drucks eines Mediums gegenüber dem gerade herrschenden Atmosphären- oder Umgebungsdruck als Referenzdruck, wobei der Relativdruck-Sensor (1) umfasst:
ein kapazitives, resistives oder piezoelektrisches Sensorelement (2) mit einer Membran (21),
ein Gehäuse (7) mit einem Innenraum (71), mit einem über den Innenraum weitgehend offenen Frontteil (72), in dessen Nähe die Membran den Innenraum derart verschließt, dass der Frontteil über die Membran vorsteht, wobei
eine Außenfläche (211) der Membran und der über die Membran vorstehende Frontteil mit einem unter einem Druck stehenden Medium beaufschlagbar ist,
mit einer durch den Frontteil(72) von einer Außenseite in das Gehäuse hinein angebrachten Bohrung (722) zur Führung von Referenzluft zu einer von der Außenfläche (211) abgewandten Innenfläche der Membran, um die Membran mit dem Referenzdruck zu beaufschlagen, **dadurch gekennzeichnet, dass**
die Bohrung (722) von der Außenseite her mit einem offenporigen, gut wärmeleitenden und hydrophoben Filter (8) aus einem hydrophob gemachten Sintermetall oder einem hydrophob gemachten Metall-Schwamm verschlossen ist, wobei der Filter derart in dem Frontteil positioniert ist, dass die Oberflächen-Temperatur des Filters praktisch gleich der Temperatur der Membran und des Mediums ist.

2. Relativdruck-Sensor nach Anspruch 1, bei dem das Sintermetall aus Edelstahl oder Bronze besteht.

3. Relativdruck-Sensor nach Anspruch 1, dem der Filter (8) aus einem hydrophob gemachten Titan- oder Zirconium-Schwamm besteht.

4. Relativdruck-Sensor nach einem der Ansprüche 1 bis 3 mit einem kapazitiven Sensorelement,
das zusätzlich zur Membran (21) einen Grundkörper (22) umfasst,
der an einem Rand mit einem Rand der Membran unter Bildung einer Kammer mittels einer Fügestelle druckdicht verbunden ist und durch den eine der Führung von Referenzluft dienende Bohrung (221) von einer Außenseite bis in die Kammer hindurchführt, und
bei dem auf einer Innenseite der Membran eine Elektrode und auf einer gegenüberliegenden Innenseite des Grundkörpers mindestens eine Elektrode angeordnet sind,
wobei die Elektrode(n) des Grundkörpers durch diesen hindurch zu dessen Außenseite hin elektrisch kontaktiert sind und die Elektrode der Membran durch die Fügestelle hindurch elektrisch kontaktiert ist.

5. Relativdruck-Sensor nach einem der Ansprüche 1 bis 3 mit einem resistiven Sensorelement, bei dem auf der Membran (21) ein einziger Dehnmessstreifen oder eine Halbbrücke aus zwei Dehnmessstreifen oder eine Vollbrücke aus vier Dehnmessstreifen angeordnet ist.

6. Relativdruck-Sensor nach einem der Ansprüche 1 bis 3 mit einem piezoelektrischen Sensorelement, bei dem auf der Membran (21) mindestens ein Piezoelement angeordnet ist.

## Claims

1. Relative pressure sensor (1) for measuring the pressure of a medium against the current atmospheric or ambient pressure present as the reference pressure, where the relative pressure sensor (1) comprises:
a capacitance, resistive or piezoelectric sensor element (2) with a membrane (21),
a housing (7) with an internal compartment (71) with a front part (72) that is open to a large extent over the internal compartment near which the membrane seals the internal compartment in such a way that the front part projects over the membrane where
an outer area (211) of the membrane and the front part projecting over the membrane can be exposed to a pressurized medium,
with a borehole (722) that goes from the outside through the front part (72) into the housing to route reference air to an inner area of the membrane that faces away from the outer area (211) to expose the membrane to the reference pressure, **characterized in that**
the borehole (722) is sealed from the outside with an open-pore, thermoconducting hydrophobic filter (8) made of a hydrophobically made sintered metal or a hydrophobically made metal sponge, where the filter is positioned in the front part in such a way that the surface temperature of the filter is practically the same as the temperature of the membrane and the medium.

2. Relative pressure sensor as per Claim 1 where the sintered metal consists of stainless steel or bronze.

3. Relative pressure sensor as per Claim 1 where the filter (8) comprises a titanium or zirconium sponge made hydrophobically.

4. Relative pressure sensor as per one of the Claims 1 to 3 with a capacitance sensor element that also comprises a meter body (22) in addition to the membrane (21) which is connected pressure-tight at one edge to an edge of the membrane by means of a joining point, forming a chamber, and through which a borehole (221), which is used to route reference air, extends from an outer side right into the chamber and
where one electrode is arranged on an inner side of the membrane and at least one electrode is arranged on an opposite inner side of the meter body
where the electrode(s) of the meter body are contacted electrically through the meter body to the outer side of the meter body and the electrode of the membrane is contacted electrically through the joining point.

5. Relative pressure sensor as per one of the Claims 1 to 3 with a resistive sensor element where a single resistance strain gauge, or a half-bridge made of two resistance strain gauges or a complete bridge made of four resistance strain gauges is arranged on the membrane (21).

6. Relative pressure sensor as per one of the Claims 1 to 3 with a piezoelectric sensor element where at least one piezo-element is arranged on the membrane (21).

## Revendications

1. Capteur de pression relative (1) destiné à la mesure de la pression d'un produit par rapport à la pression atmosphérique ou ambiante actuelle en tant que pression de référence, le capteur de pression relative (1) comprenant :
un élément capteur (2) capacitif, résistif ou piézoélectrique, doté d'une membrane (21),
un boîtier (7) doté d'un espace intérieur (71), avec une partie frontale (72) largement ouverte à travers l'espace intérieur, partie frontale à proximité de laquelle la membrane obture l'espace intérieur de telle manière que la partie frontale déborde la membrane, pour lequel
une surface extérieure (211) de la membrane et la partie frontale débordant la membrane peuvent être alimentées avec un produit sous pression,
avec un perçage (722) réalisé à travers la partie frontale (72) depuis une face extérieure dans le boîtier, perçage destiné à guider l'air de référence vers une face intérieure de la membrane située du côté opposé de la face extérieure (211), afin d'alimenter la membrane avec la pression de référence, **caractérisé en ce que**
le perçage (722) est obturé, depuis le côté extérieur, avec un filtre hydrophobe (8) à pores ouverts, d'une bonne conduction thermique, constitué d'un métal fritté hydrophobe ou d'une éponge métallique hydrophobe, le filtre étant positionné dans la partie frontale de telle sorte que la température de surface du filtre est pratiquement égale à la température de la membrane et du produit.

2. Capteur de pression relative selon la revendication 1, pour lequel le métal fritté est en acier inoxydable ou en bronze.

3. Capteur de pression relative selon la revendication 1, pour lequel le filtre (8) est constitué d'une éponge hydrophobe en titane ou en zirconium.

4. Capteur de pression relative selon l'unes des revendications 1 à 3, avec un élément capteur capacitif,
qui, en plus de la membrane (21), comprend un corps de base (22), lequel est relié par un des ses bords, de façon étanche au moyen d'un point d'assemblage, avec un bord de la membrane en formant une chambre, et à travers lequel est réalisé un perçage (221) depuis la face extérieure jusque dans la chambre, servant au guidage de l'air de référence, et
pour lequel est disposé, sur la face intérieure de la membrane, une électrode et, sur la face intérieure opposée du corps de base, au moins une électrode,
la ou les électrodes du corps de base étant en mises contact électrique à travers le corps jusqu'à sa face extérieure, et l'électrode de la membrane étant mise en contact électrique à travers le point d'assemblage.

5. Capteur de pression relative selon l'unes des revendications 1 à 3 avec un élément capteur résistif, pour lequel est disposé sur la membrane (21) un unique extensomètre à résistance ou un pont intégral de quatre extensomètres à résistance.

6. Capteur de pression relative selon l'unes des revendications 1 à 3 avec un élément capteur piézoélectrique, pour lequel est disposé au moins un élément piézoélectrique sur la membrane (21).
